Europäisches Patentamt

European Patent Office

Office européen des brevets

(11) Veröffentlichungsnummer: **0 005 137**
B1

(12) **EUROPÄISCHE PATENTSCHRIFT**

(45) Veröffentlichungstag der Patentschrift: **01.07.81**

(21) Anmeldenummer: **78101783.5**

(22) Anmeldetag: **20.12.78**

(51) Int. Cl.³: **F 16 K 31/04, E 05 F 15/10**

(54) **Stellantrieb für ein Verschlussorgan, insbesondere einen Lüftungsschieber oder eine Lüftungsklappe einer Lüftungsvorrichtung oder dgl.**

(30) Priorität: **27.04.78 DE 2818461**

(43) Veröffentlichungstag der Anmeldung:
**14.11.79 Patentblatt 79/23**

(45) Bekanntmachung des Hinweises auf die Patenterteilung:
**01.07.81 Patentblatt 81/26**

(84) Benannte Vertragsstaaten:
**BE CH FR GB NL SE**

(56) Entgegenhaltungen:
**FR - A - 2 040 567**
**US - A - 3 078 407**
**US - A - 3 870 274**
**US - A - 4 057 934**

(73) Patentinhaber: **SIEGENIA-FRANK KG**
**Eisenhüttenstrasse 22**
**D-5900 Siegen 1 (DE)**

(72) Erfinder: **Kucharczyk, Eckhard**
**Buchenweg 21**
**D-5902 Netphen 3 (DE)**

Courier Press, Leamington Spa, England.

Stellantrieb für ein Verschlußorgan, insbesondere einen Lüftungsschieber oder eine Lüftungsklappe
einer Lüftungsvorrichtung od. dgl.

b) Technisches Gebiet

Die Erfindung betrifft einen Stellantrieb für ein Verschlußorgan, insbesondere einen Lüftungsschieber oder eine Lüftungsklappe einer Lüftungsvorrichtung od. dgl., bestehend aus einem selbstanlaufenden Einphasen-Wechselstrom-Synchronmotor, durch welchen der Lüftungsschieber bzw. die Lüftungsklappe zwischen zwei vorbestimmten Endstellungen, nämlich einer Schließstellung und einer Öffnungsstellung, hin und her bewegbar sowie in einer beliebig vorwählbaren dieser Endstellungen stillsetzbar ist, wobei die jeweilige Endstellung über einen Wechselkontakt vorwählbar und über zwei diesem in verschiedenen Leitungszweigen nachgeordnete, durch eine vom Einphasen-Wechselstrom-Synchronmotor antreibbare Nockenscheibe öffen- und schließbare Schalter ansteuerbar ist.

Nach den Richtlinien für Unfallverhütung des Hauptverbandes der gewerblichen Berufsgenossenschaften müssen Stellantriebe zum Betätigen von Verschlußorganen für Durchbrüche in Gebaudewänden, nämlich insbesondere Tür, Fenster- und Lüftungsöffnungen, so ausgelegt sein, daß zumindest der Schließvorgang der Verschlußorgane bei Gefahr des Einklemmens sofort unterbrochen wird.

Diese Unfallverhütungs-Richtlinien sind auch auf Lüftungsvorrichtungen anzuwenden, deren Lüftungsschieber oder Lüftungsklappe durch Fernsteuerung bewegbar ist. Dort besteht nämlich die erhöhte Gefahr, daß bei der ferngesteuerten Einleitung der Umstellbewegung, sich Körperteile von Personen, insbesondere Finger von Kindern, unbemerkt in der Bewegungsbahn der Lüftungsschieber oder Lüftungsklappen befinden und gegen Verletzungen geschützt werden müssen.

c) Stand der Technik

Durch die US—A 3 870 274 gehört bereits ein Stellantrieb für ein Ventil eines Heizkörpers zum Stand der Technik, welcher mit einem selbstanlaufenden Einphasen-Wechselstrom-Synchronmotor ausgestattet ist. Dabei kann die Ventilklappe mittels des Einphasen-Wechselstrom-Synchronmotors zwischen zwei vorbestimmten Endstellungen, nämlich einer Schließstellung und einer Öffnungsstellung der Ventilklappe hin- und her bewegt sowie in einer beliebig vorwählbaren Endstellung stillgesetzt werden.

Bei diesem bekannten Stellantrieb kann auch die jeweilige Endstellung für die Ventilklappe über einen Wechselkontakt vorgewählt sowie über zwei diesem Wechselkontakt in verschiedenen Leitungszweigen nachgeordnete Schalter angesteuert werden, die wiederum durch eine vom Einphasen-Wechselstrom-Synchronmotor antreibbare Nockenscheibe öffen- und schließbar sind.

Bei diesem bekannten Stellantrieb ist jeder beiden möglichen Endstellung der das Stellorgan bildenden Ventilklappe ein mechanischer Anschlag zugeordnet, gegen welchen das Stellorgan dann anläuft, wenn der Einphasen-Wechselstrom-Synchronmotor in derjenigen Drehrichtung anlaufen sollte, welche der jeweils gewünschten Stellrichtung entgegengesetzt ist. Erst der durch das Anlaufen des Stellorgans gegen den mechanischen Anschlag hervorgerufene Widerstand führt dann — aufgrund der Betriebscharakteristik des Einphasen-Wechselstrom-Synchronmotors — zu einer Drehrichtungsumkehr, durch die dann das Stellorgan in der jeweils gewünschten Richtung bewegt wird.

Es kann also davon ausgegangen werden, daß bei dem bekannten Stellantrieb nach der US—A 3 870 274 der Einphasen-Wechselstrom-Synchronmotor aufgrund der Wahrscheinlichkeit in 50% der Fälle zunächst in der falschen Stellrichtung anläuft und dementsprechend erst eine Drehrichtungsumkehr erfahren muß, um die jeweils gewünschte Verstellbewegung hervorzubringen.

Eine Drehrichtungsumkehr des Einphasen-Wechselstrom - Synchronmotors während der Bewegung des Stellorgans zwischen seinen definierten Endstellungen ist zwar beim Stellantrieb nach der US—A 3 870 274 theoretisch denkbar; sie tritt jedoch praktisch nicht ein, weil das Stellorgan so eingekapselt ist, daß in seine Bewegungsbahn keine zufälligen Hindernisse gelangen können.

d) Beschreibung der Erfindung

Aufgabe der Erfindung ist es, einen Stellantrieb der gattungsgemäßen Art für Verschlußorgane von Wanddurchbrüchen in Gebäuden od. dgl., insbesondere für einen Lüftungsschieber oder eine Lüftungsklappe einer Lüftungsvorrichtung, zu schaffen, durch welchen das Verschlußorgan beispielsweise der Lüftungsschieber oder die Lüftungsklappe, ohne mechanische Anschlags-Hilfsmittel aus der jeweiligen Endstellung unmittelbar in der richtigen Bewegungsrichtung angetrieben wird, unabhängig davon, in welcher Drehrichtung der Einphasen - Wechselstrom - Synchronmotor jeweils anläuft. Trotzdem soll jedoch sichergestellt sein, daß Hindernisse, welche während der Verstellbewegung des Verschlußorgans nach dem Verlassen der einen Endstellung und vor dem Erreichen der anderen Endstellung zufällig oder bewußt in dessen Bewegungsbahn gelangen, spontan eine Bewegungsumkehr des Einphasen - Wechselstrom-Synchronmotors herbeiführen, ohne daß das Verschlußorgan in der gerade von ihm verlassenen Endstellung verbleibt. Vielmehr soll das Verschlußorgan unter Beibehaltung der jeweiligen Drehrichtung des Einphasen-Wech-

selstrom-Synchronmotors durch diese End-stellung hindurch wieder in die vorgegebene Bewegungsrichtung laufen, um in die vorgewählte andere Endstellung zu gelangen.

Dieses komplexe Problem wird nach der Erfindung dadurch gelöst, daß der Einphasen-Wechselstrom-Synchronmotor über einen Schubkurbeltrieb mit dem Verschlußorgan, beispielsweise dem Lüftungsschieber bzw. der Lüftungsklappe, in Stellverbindung steht, welcher mit je einer Totpunktlage die Schließstellung und die Öffnungsstellung des Verschlußorgans bestimmt, und daß die über die Nockenscheibe öffen- und schließbaren Schalter den beiden Totpunktlagen des Schub-kurbeltriebes zugeordnet sind, während aus-schließlich zwischen den beiden Totpunktlagen mobile Hindernisse im Stellweg des Verschluß-organs unmittelbare, mechanische Umsteuer-anschläge für den Einphasen-Wechselstrom-Synchronmotor bilden.

Der besondere Vorteil eines solchen Stellantriebs liegt darin, daß er mit einem minimalen technischen Aufwand verwirklicht werden kann sowie bei optimaler Arbeitsweise einen größtmöglichen Unfallschutz gewährleistet und eine hohe Betriebssicherheit aufweist.

Durch die beiden Totpunktlagen des Schubkurbeltriebes kann das Verschlußorgan auf einfache Weise sowohl in seiner Schließstellung als auch in seiner Öffnungsstellung fixiert und somit ohne zusätzliche mechanische Anschläge gegen Verstellung durch äußere Kraftwirkungen blockiert werden. Sobald jedoch das Verschlußorgan sich aus seiner Schließstellung oder seiner Öffnungsstellung entfernt hat führen an ihm wirksam werdende äußere Kräfte völlig selbsttätig Ausweichbewegungen herbei, die sowohl Überlastungen als auch Verletzungen verhindern.

Bei Lüftungsvorrichtungen für Räume ist es vielfach wichtig daß das Öffnen und Schließen der Lüftungsschieber bzw. Lüftungsklappen nicht nur willensabhängig durch eine Person ausgelöst werden kann, indem diese den Wechselkontakt in die jeweils gewünschte Vorwählstellung bringt, sondern daß eine Verstellung des Lüftungsschiebers bzw. der Lüftungsklappe auch ereignisabhängig selbsttätig durch das Ansprechen eines entsprechenden Sensors ausgelöst wird.

Bei ereignisabhängiger Betätigung von Ver-schlußorganen für Durchbrüche in Gebäude-wänden, wie Tür-, Fenster- und Lüftungsöffnungen, ist eine robuste aber trotzdem empfindliche Arbeitsweise des Stellantriebs besonders wichtig, weil der Eintritt der Ereignisse nicht ohne weiteres voraussehbar ist und sich daher leicht Beschädigungen oder Verletzungen einstellen könnten, wenn beim Ereigniseintritt zufällig ein Hindernis im Stellweg vorhanden sein sollte.

Eine vorteilhafte Weiterbildung besteht daher nach der Erfindung darin, daß zwischen den durch die Nockenscheibe öffen- und schließbaren Schaltern und dem manuell betätigbaren Wechselkontakt ein weiterer, durch Fernsteuerung betätigbarer Wechselkontakt vorgesehen und in einem der beiden durch den manuell betätigten Wechselkontakt ansteuerbaren Leitungszweige angeordnet ist, derart, daß über den fernsteuerbaren Wechselkontakt entweder der eine oder andere Schalter mit dem einen Leitungszweig verbindbar ist.

In diesem übernimmt der manuell betätigte Wechselkontakt praktisch die Funktion eines Hauptschalters, während der durch Fern-steuerung betätigbare Wechselkontakt als Hilfs-schalter wirksam ist, welcher in einer ganz bestimmten Wirkstellung des Hauptschalters die Funktionssteuerung für den Stellantrieb übernimmt.

e) Beschreibung der Zeichnungsfiguren

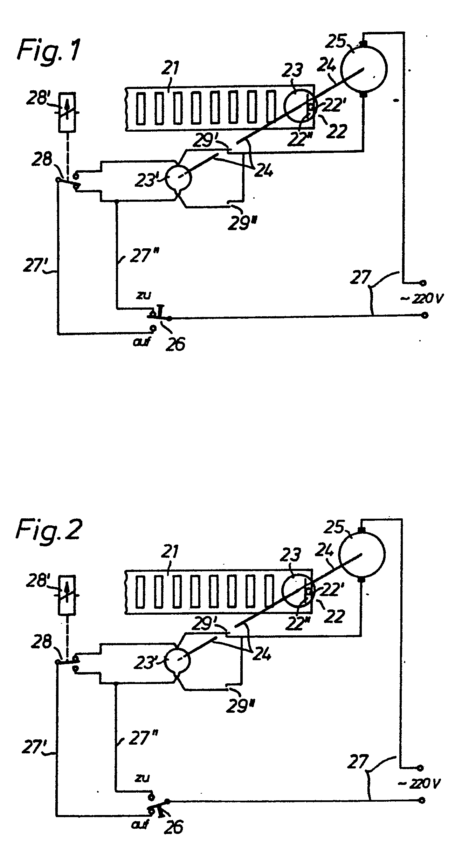

Die Fig. 1 bis 4 zeigen in schematisch vereinfachter Darstellung die Anordnung und Wirkungsweise eines erfindungsgemäßen Stellantriebs für die Betätigung eines Lüftungsschiebers während verschiedener Arbeits-phasen.

f) Wege zur Ausführung der Erfindung

In den Fig. 1 bis 4 der Zeichnung ist ein Stellantrieb in Verbindung mit einem die Luft-durchgangsöffnungen einer Lüftungsvor-richtung freigebenden bzw. absperrenden Schieber 21 gezeigt.

Die Bewegung dieses Schiebers 21 wird durch einen Schubkurbeltrieb 22 hervorgerufen, welcher aus einem auf einer Scheibe 23 sitzenden Kurbelzapfen 22' und einer am Schieber 21 ausgebildeten Gleitkulisse 22'' besteht.

Die Scheibe 23 ist drehfest auf einer Welle 24 aufgekeilt, welche den Antrieb des, als Getriebemotor ausgebildeten, Einphasen-Wechselstrom-Synchronmotors 25 bildet.

Drehfest auf der Antriebswelle 24 sitzt ferner eine Nockenscheibe 23', und zwar derart, daß sie jeweils eine der Scheibe 23 entsprechende Winkeldrehung ausführt.

In der Schließlage der Lüftungsvorrichtung nimmt der Schieber 21 die aus den Fig. 1 und 2 ersichtliche Stellung ein, in welcher der auf der Scheibe 23 sitzende Kurbelzapfen 22', bezogen auf die Verstellrichtung des Schiebers 21, die rechte Totpunktlage hat.

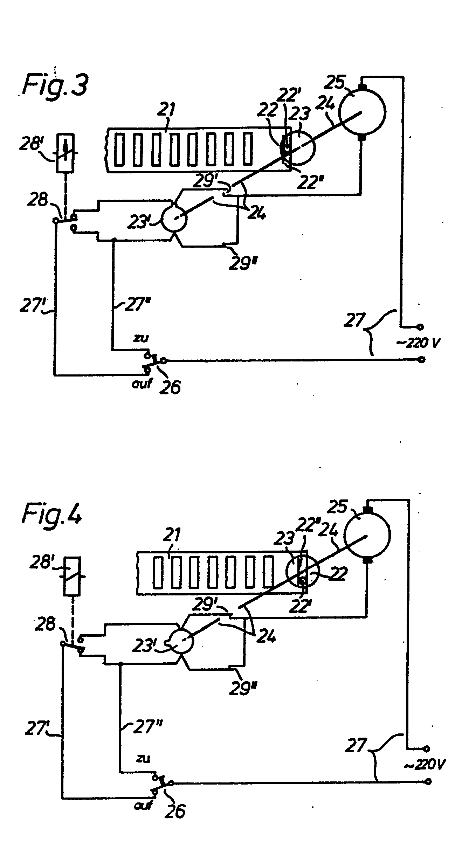

Bei geöffneter Lüftungsvorrichtung befindet sich der Schieber 21 in der aus Fig. 3 ersichtlichen Stellung, d.h., der auf der Scheibe 23 sitzende Kurbelzapfen 22' nimmt seine linke Totpunktlage ein.

Über einen manuell betätigbaren, als Wechselkontakt 26 ausgebildeten Schalter kann der Einphasen-Wechselstrom-Synchronmotor 25 mit dem Netz 27 verbunden werden. Dabei arbeitet der Wechselkontakt 26 mit zwei verschiedenen Leitungszweigen 27' und 27'' zusammen. In den Leitungszweig 27' ist beim Ausführungsbeispiel ein zweiter Wechselkontakt 28 gelegt, der beispielsweise über ein Relais 28' fernsteuerbar ist. Dieser Wechselkontakt 28 arbeitet mit einer weiteren Leitungsverzeigung zusammen, wobei in der einen ein Microschalter 29' und in der anderen ein Microschalter 29'' angeordnet ist. Die beiden Microschalter 29' und 29'' werden durch die Nockenscheibe 23' gesteuert.

Der dem Wechselkontakt 26 zugeordnete zweite Leitungszweig 27'' ist unmittelbar mit der den Microschalter 29'' enthaltenden Leitungsverzweigung verbunden.

Es sei nun angenommen, daß die Lüftungsvorrichtung sich in ihrer Schließlage befindet, wie sie aus Fig. 1 ersichtlich ist. In dieser Funktionslage ist der manuell betätigte Wechselkontakt 26 mit dem Leitungszweig 27'' und dem Microschalter 29'' verbunden. Letzterer ist dabei über die Nockenscheibe 23' in Öffnungsstellung gebracht. Zugleich befindet sich jedoch der Microschalter 29' in seiner Schließlage.

Ein Öffnen der Lüftungsvorrichtung durch Verstellung des Schiebers 21 kann nur ausgelöst werden, wenn der Wechselkontakt 26 zuvor aus seiner Stellung nach Fig. 1 in die Stellung nach Fig. 2 gebracht, also vom Leitungszweig 27'' getrennt und mit dem Leitungszweig 27' verbunden wird.

Die Umstellung des Wechselkontaktes 26 in die Stellung nach Fig. 2 hat jedoch keine Folgen, solange der im Leitungszweig 27' angeordnete zweite Wechselkontakt 28 noch die aus Fig. 1 ersichtliche Stellung einnimmt, weil der Microschalter 29'' geöffnet ist.

Erst wenn durch ein zusätzliches Ereignis das Relais 28' anspricht und den Wechselkontakt 28 in die Schaltstellung nach Fig. 2 bringt, wird über den geschlossenen Microschalter 29' der Einphasen-Wechselstrom-Synchronmotor 25 mit dem Netz 27 verbunden. Da dieser auf den Schubkurbeltrieb 22 arbeitet, dessen rechte Totpunktlage ausschließlich durch das Öffnen des Microschalters 29'' über die Nockenscheibe 23' bestimmt ist, kann der Einphasen-Wechselstrom-Synchronmotor 25 in jeder der beiden möglichen Drehrichtungen anlaufen, um den Schieber 21 in Richtung der Öffnungsstellung nach Fig. 3 zu bewegen. Der Microschalter 29' bleibt dabei so lange geschlossen, bis der Schieber 21 die Stellung nach Fig. 3 und damit der Schubkurbeltrieb 22 seine linke Totpunktlage erreicht hat. In diesem Augenblick öffnet der Microschalter 29' und trennt den Einphasen-Wechselstrom-Synchronmotor 25 vom Netz 27, obwohl der Microschalter 29'' zuvor bereits in seine Schließstellung gelangt ist.

Fällt das Ereignis weg, welches zum Ansprechen des Relais 28' geführt hat, oder wird der Wechselkontakt 26 wieder in die Stellung nach Fig. 1 gebracht, dann wird der Wechselkontakt 28 wieder zurückgestellt und damit über den Microschalter 29'' der Einphasen - Wechselstrom - Synchronmotor 25 weider mit dem Netz 27 verbunden. Auch in der linken Totpunktlage des Schubkurbeltriebes 22 nach Fig. 3 ist es gleichgültig, mit welcher Drehrichtung der Einphasen-Wechselstrom-Synchronmotor 25 anläuft, um den Schieber 21 in seine Schließlage zurückzubewegen.

Wenn auf den Schieber 21 während seiner durch den Schubkurbeltrieb 22 hervorgebrachten Bewegung ein Bremswiderstand einwirkt, welcher der jeweiligen Bewegungsrichtung des Schiebers entgegengesetzt ist, dann wirkt dieser über den Schubkurbeltrieb 22 auf den Einphasen-Wechselstrom-Synchronmotor 25 zurück und löst in ihm einen Schlupf der Felderregerkurve gegenüber dem Feldmagneten aus. Hieraus resultiert dann spontan eine Drehrichtungs-Umkehr des Einphasen-Wechselstrom - Synchronmotors 25, durch welche erreicht wird, daß der Schieber 21 dem vorhandenen Bremswiderstand selbsttätig ausweicht, indem er sich entgegengesetzt zur ursprünglichen Bewegungsrichtung verschiebt. Da aber in diesem Falle als Folge der Drehrichtungs-Umkehr der jeweilige Microschalter geschlossen bleibt, läuft der Schubkurbeltrieb 22 über seine Totpunktlage durch und bewegt damit den Schieber 21 erneut in der ursprünglich beabsichtigten Verstellrichtung. Ist dann der dieser Verstellrichtung entgegenwirkende Bremswiderstand weggefallen, wird der Schieber 21 in die vorgesehene Endstellung gebracht und dort durch das Öffnen des dieser zugeordneten Microschalters stillgesetzt. Ist der fernsteuerbare Wechselkontakt 28 im Leitungszweig 27' vorgesehen, um wahlweise den Microschalter 29' oder den Microschalter 29'' mit diesem Leitungszweig 27' in Verbindung zu bringen, dann kann das Ansprechen des Relais 28' durch verschiedene Ereignisse ausgelöst werden. Beispielsweise kann es mit einem Gassensor zusammenarbeiten, der für schädliche oder auch nur unangenehme Gaskonzentrationen in Räumen empfindlich ist. Ebenso ist es aber auch möglich, das Relais 28' mit einem Schallsensor zusammenarbeiten zu lassen, welcher beim Überschreiten eines bestimmten äußeren Geräuschpegels anspricht und über das Relais 28' den Wechselkontakt 28 so verstellt, daß die Lüftungsvorrichtung sich selbsttätig schließt, sofern sie sich in ihrer Öffnungsstellung befindet.

g) Die gewerbliche Nutzungsbereich

Der vorstehend beschriebene und beanspruchte Stellantrieb läßt sich praktisch überall dort in Benutzung nehmen, wo es darauf ankommt, kraftbetätigte Verschlußorgane für Durchbrüche in Gebäudewänden, wie Tür-, Fenster- und Lüftungsöffnungen, mit geringstmöglichem technischem Aufwand bei großer Robustheit entsprechend den Unfallverhütungs-Richtlinien so zu steuern, daß die Gefahr des Einklemmens von Personen. Körperteilen und Gegenständen vermieden wird.

## Patentansprüche

1. Stellantrieb für ein Verschlußorgan, insbesondere einen Lüftungsschieber oder eine Lüftungsklappe (21) einer Lüftungsvorrichtung, bestehend aus einem selbstanlaufenden Einphasen-Wechselstrom-Synchronmotor (25), durch welchen der Lüftungsschieber bzw. die Lüftungsklappe (21) zwischen zwei vorbestimmten Endstellungen, nämlich einer Schließstellung und einer Öffnungsstellung hin und her bewegbar sowie in einer beliebig vorwählbaren dieser Endstellungen stillsetzbar ist, wobei die jeweilige Endstellung über einen Wechselkontakt (26) vorwählbar und über zwei diesem Wechselkontakt (26) in verschiedenen Leitungszweigen (27', 27'') nachgeordnete, durch eine vom Einphasen-Wechselstrom-Synchronmotor (25) antreibbare Nockenscheibe (23') öffen- und schließbare Schalter (29', 29'') ansteuerbar ist, dadurch gekennzeichnet, daß der Einphasen-Wechselstrom-Synchronmotor (25) über einen Schubkurbeltrieb (22) mit dem Lüftungsschieber bzw. der Lüftungsklappe (21) in Stellverbindung steht, welcher mit je einer Totpunktlage die Schließstellung und die Öffnungsstellung des Lüftungsschiebers bzw. der Lüftungsklappe (21) bestimmt, und daß die über die Nockenscheibe (23') öffen- und schließbaren Schalter (29' und 29'') den beiden Totpunktlagen des Schubkurbeltriebs (22) zugeordnet sind, während ausschließlich zwischen den beiden Totpunktlagen mobile Hindernisse im Stellweg des Lüftungsschiebers bzw. der Lüftungsklappe (21) unmittelbare, mechanische Umsteueranschläge für den Einphasen-Wechselstrom-Synchronmotor (5) bilden.

2. Stellantrieb nach Anspruch 1, dadurch gekennzeichnet, daß zwischenden Schaltern (29', 29'') und dem manuell betätigbaren Wechselkontakt (26) ein weiterer, durch Fernsteuerung (28') betätigbarer Wechselkontakt (28) vorgesehen und in einem (27') der beiden durch den Wechselkontakt (26) ansteuerbaren Leitungszweige (27', 27'') angeordnet ist, derart, daß über den Wechselkontakt (28) entweder der Schalter (29') oder der Schalter (29'') mit dem Leitungszweig (27') verbindbar ist.

## Claims

1. Actuating drive for a closure member, especially a register or a ventilation flap (21) of a ventilation device, comprising a self-starting single-phase synchronous a.c. motor (25) by means of which the register or the flap (21) is movable back and forth between two predetermined end positions, namely a closing position and an open position in which the component can be stopped in any optionally preselective end position, controlled through a make-break contact (26) and through two micro switches (29', 29''), that are arranged behind the make-break contact in different line branches (27', 27'') and are capable of being opened and closed via a disc cam (23') that is driven by the single-phase synchronous a.c. motor (25) characterized in such a manner that the single-phase synchronous a.c. motor (25) is in actuating connection with the register or the ventilation flap (21) via a thrust crank mechanism (22), which determines the closing and open position of the register or ventilation flap (21) due to two dead-centre positions, and that the micro switches (29' and 29''), which are being opened and closed via the disc cam (23'), are located adjacent to the two dead-centre positions of the thrust crank mechanism (22), whereas only between the two dead-centre positions mobile obstructions in the way of the register or the ventilation flap (21) form immediate, mechanical reversing stops for the single-phase synchronous a.c. motor.

2. Actuating drive as recited in claim 1, characterized in such a manner, that between the switches (29', 29'') and the manually operable make-break contact (26) another make-break contact (28) operable by remote control (28') is provided and lies in one (27') of the two line branches (27', 27'') that can selectively be controlled through the manually operable make-break contact (26) in such way that via the make-break contact (28) either the micro switch (29') or the micro switch (29'') is connected with the line branch (27').

## Revendications

1. Commande de réglage d'un organe de fermeture, en particulier d'un organe de ventilation à coulissement ou d'un organe de ventilation à rabattement (21) d'un dispositif de ventilation, cette commande de réglage étant constituée par un moteur synchrone à courant alternatif monophasé (25) à démarrage automatique par lequel l'organe de ventilation à coulissement ou l'organe de ventilation à rabattement (21) peut être déplacé de l'une à l'autre de deux positions extrêmes préalablement déterminées, c'est-à-dire d'une position de fermeture à une position d'ouverture, et inversement, de même qu'il peut être fixé dans l'une quelconque de ces positions extrêmes, préalablement choisie, la position extrême en question pouvant être préalablement choisie par l'intermédiaire d'un contact à deux directions ou contact inverseur (26) et pouvant être commandée à l'intervention de deux commutateurs (29', 29'') prévus en aval de ce contact à deux directions (26) sur des branches de conducteurs différentes (27', 27'') et pouvant être ouverts et être fermés à l'intervention d'un disque de came (23') pouvant être commandé par le moteur synchrone à courant alternatif monophasé (25), la commande de réglage étant caractérisée en ce que le moteur synchrone à courant alternatif monophasé (25) est en liaison de réglage avec l'organe de ventilation à coulissement ou avec l'organe de ventilation à rabattement (21) par l'intermédiaire d'une commande à bielle-manivelle (22) qui détermine, pour une position de point mort correspondante, la position de fermeture et la position d'ouverture de l'organe de ventilation à coulissement ou de l'organe de ventilation à rabattement (21), et en ce que les commutateurs (29', 29'') qui peuvent être ouverts et être fermés à l'intervention du disque de came (23') sont associés aux deux positions de point mort de la commande à bielle-manivelle (22), tandis que des obstacles mobiles exclusivement entre les deux positions de point mort forment, sur le trajet de réglage de l'organe de ventilation à coulissement ou de l'organe de ventilation à rabattement (21), des arrêts mécaniques directs de commutation de commande pour le moteur synchrone à courant alternatif monophasé (25).

2. Commande de réglage suivant la revendication 1, caractérisée en ce qu'il est prévu, entre les commutateurs (29', 29'') et le contact à deux directions (26) pouvant être actionné à la main, un autre contact à deux directions (28), qui peut être actionné par une commande à distance (28') et qui se trouve sur l'une (27') des deux branches de conducteurs (27', 27'') pouvant être commandées par le contact à deux directions (26), de telle sorte que, par l'intermédiaire du contact à deux directions (28), soit le commutateur (29'), soit le commutateur (29'') puisse être relié à la branche de conducteur (27').

Fig. 1

Fig. 2

Fig.3

Fig.4